# EUROPEAN PATENT SPECIFICATION

(11) **EP 3 767 354 B1**
(45) Date of publication and mention of the grant of the patent: **10.09.2025**
(21) Application number: 19186988.2
(22) Date of filing: 18.07.2019
(51) Int. Cl.: G02B 6/44

(54) **CABLE MANAGEMENT SYSTEM**
KABELFÜHRUNGSSYSTEM
SYSTÈME DE GESTION DE CÂBLE

(43) Date of publication of application: 20.01.2021
(73) Proprietor: Reichle & De-Massari AG, 8620 Wetzikon (CH)
(72) Inventor: Zidarova, Nadejda, 1574 Sofia (BG); Franzke, Jörg, 8623 Wetzikon (CH)
(74) Representative: Daub, Thomas

(56) References cited:
- EP-A1- 2 255 234
- EP-B1- 2 255 234
- WO-A1-2009/040566
- WO-A1-98/35415
- US-A- 4 118 838
- US-A1- 2007 031 099
- US-A1- 2012 037 765
- US-A1- 2014 314 388
- US-A1- 2018 081 139

## Description

### State of the art

The invention relates to a cable management system according to the preamble of claim 1, a cable management device according to claim 10 that is implemented by assembly from the cable management system and a method for assembling the cable management device according to claim 11.

From the state of the art cable management systems with drawer units for managing cables, in particular patch cables, in particular optical fiber cables, are known. The drawer units are designed to receive trays with connection management units.

Furthermore, from the publication EP 2 255 234 B1 an optical fibre organiser is known, comprising at least one optical fibre storage tray, a support for supporting the storage tray(s) and at least one cable termination retention means for securing incoming/outgoing cable(s).

The objective of the invention is, in particular but not limited to, to provide a cable management system with improved characteristics regarding a construction. The objective is achieved, according to the invention, by the features of claim 1, while advantageous implementations and further developments of the invention may be gathered from the dependent claims.

### Advantages of the invention

A cable management system is proposed, comprising: preferably at least one cable management unit which has at least one receiving space for receiving at least one drawer unit, and at least one drawer unit preferably fitting into the receiving space and configured for a management of cables, preferably optical fiber cables, wherein the drawer unit comprises at least one first fixation unit for a fixation of at least one first connection management unit and at least one second fixation unit for a fixation of at least one second connection management unit.

By means of the invention a simplified and/or cost-efficient and/or space-efficient assembly of a cable management device from the cable management system is achievable. Advantageously, additional costs and/or space due to a utilization of separate trays with connection management units can be avoided.

A "cable management system" may be understood, in this context, as a modular construction system, which comprises a certain number of elements to build, preferably in a modular way, a unit or device which is configured to execute at least one function in at least one operational state.

Moreover, a "cable management unit" may be understood as a unit which is in at least one operational state configured for managing, in particular guiding, connecting, coupling, terminating and/or distributing, cables, in particular patch cables, in particular a plurality of cables, in particular a plurality of patch cables, preferably optical fiber cables. In particular, the cable management unit comprises at least one frame unit, in particular a chassis and/or an exterior housing, which can preferably be fastened to a carrier unit and which is configured to at least partly and preferably at least to a large extent delimit at least one receiving space for receiving at least one drawer unit and/or at least one further drawer unit and preferably a plurality of drawer units and/or further drawer units, in particular at least two, preferably at least three and particularly preferably at least six drawer units and/or further drawer units. Preferably the frame unit is configured for receiving up to six drawer units and/or further drawer units, wherein each of the drawer units and/or further drawer units received in the frame unit is preferably individually movable, in particular with respect to any other drawer unit and/or further drawer unit and in particular with respect to the frame unit, from a storage position into at least one process position and advantageously into at least two different process positions and vice versa. This allows achieving a particularly flexible cable management, in particular without affecting other drawer units and/or further drawer units during movement of one drawer unit and/or further drawer unit. Furthermore, handling can be simplified as the frame unit may advantageously be handled as a single structural unit.

Moreover, the cable management unit could be embodied, for example, as an ETSI insert, in particular with a standard width of 535 mm, as a 23-inch insert and/or as any other insert, in particular for connecting to an, in particular standard, ETSI rack, 23-inch rack and/or any other rack. It is, however, advantageously proposed that the cable management unit is embodied as a 19-inch insert, in particular for connecting to an, in particular standard, 19-inch rack. Furthermore, the cable management unit could, in particular, have a height between 1 height unit and 5 height units. However, preferably the cable management unit has a height of 1 height unit. The cable management unit could be embodied, for example, as an ETSI insert, as a 23-inch insert and/or as any other suitable insert. However, it is proposed that the cable management unit is advantageously embodied as a 19-inch insert and is configured to support at least 144 fiber connections, in particular at least 144 LC simplex port connections per height unit, allowing each two LC simplex port connections to be used as one LC double port connection. Preferably, a port density of the cable management unit is 144 port connections per 1 height unit. In this way in particular a cable management device with an improved flexibility may be provided, wherein the cable management device may in particular be individually adaptable to different needs of users.

Furthermore, a "drawer unit" may be understood as a, possibly movably mounted, unit which is located in a storage position, in particular in the receiving space, and which is preferably configured for providing and/or supporting a connection functionality and/or a connection capability. Herein, the drawer unit is preferably configured for guiding, connecting, coupling, terminating and/or distributing at least one cable. Advantageously, the drawer unit extends at least largely over half a width of the cable management unit. In addition, the drawer unit could in particular have a height between 10 % and 80 %, preferably between 15 % and 60 % and particularly preferably between 20 % and 40 %, of a height of the cable management unit. However, preferably the drawer unit has a height of 33 % of a height of the cable management unit. Particularly preferably, the cable management unit comprises a plurality of drawer units, preferably at least one drawer unit, particularly preferably at least three and most preferably at least six drawer units, which are preferably releasable from, connectable to and/or exchangeable for each other individually and which may be embodied, at least to a large extent, at least substantially identical to each other. In addition, the drawer units are preferably located in two columns adjacently to each other and in three rows, which are particularly preferably arranged one above the other. The drawer units have in particular each a modular structure and are preferably movable from at least one storage position to at least one process position and vice versa, preferably in a linear motion. By the expression "having a modular structure" is herein to be understood, in particular, that the drawer unit itself and/or at least one structural component of the drawer unit has a modular structure and/or is implemented in such a way that it can be assembled modularly, comparable to a construction kit. In particular, herein at least one structural component of the drawer unit is substituted for at least one further structural component. Particularly preferably, the drawer unit is herein extendable and/or reducible in any required way.

Furthermore, a "storage position" may be understood a mechanically defined position, in particular with respect to the frame unit, of the drawer unit, in which a normal operation takes place and/or in which a processing operation, e.g. a maintenance, a new cabling, a patching and/or a splicing, is limited to a large extent. In particular, in the storage position the drawer unit is at least largely and preferably completely located in the receiving space of the cable management unit and/or at least largely and preferably completely inserted into the cable management unit. By a "process position" may be understood an in particular mechanically defined position, in particular with respect to the frame unit, of the drawer unit, in which a processing operation, e.g. a maintenance operation, a cabling operation, a patching operation and/or a splicing operation, is possible. In particular, in the process position the drawer unit is only partly located in the receiving space of the cable management unit and/or only partly inserted in the cable management unit.

The first fixation unit and/or the second fixation unit may be configured to hinder a movement of the first connection management unit and/or the second connection management unit, respectively, in at least one direction, preferably in any direction. The first fixation unit and/or the second fixation unit may, preferably releasably, fix the first connection management unit and/or the second connection management unit respectively by means of at least one plug connection and/or snap connection and/or screw connection and/or magnet connection. Advantageously, the first fixation unit and/or the second fixation unit are capable of a fixation of a plurality of different types of connection management units, preferably in an interchangeable manner.

A "connection management unit" may be understood as a unit configured to assist with defining of a routing of at least one signal path and/or of at least one member, for example a fiber and/or a cable strengthening member, of at least one of the cables in the drawer unit. A "routing" may relate to a course of the signal path and/or a course of the member of the cable and/or a connection of the member to at least one further member of at least one further cable. The connection management unit may for example be configured to hinder a movement of and/or to guide at least one member of the cable and/or to connect at least one member of the cable to at least one member of a further cable.

"Configured" is to mean specifically designed and/or equipped. By an object being configured for a certain function, it is to be understood that the object fulfills and/or implements this certain function in at least one application state and/or operating state.

Furthermore, it is proposed that the drawer unit is embodied in a one-part implementation. Preferably, the first and second fixation units are embodied in a one-part implementation with a remaining portion of the drawer unit. "Embodied in a one-part implementation" may be understood as being embodied as one coherent piece, for example by way of at least one welding process and/or gluing process and/or any other process deemed suitable by someone skilled in the art, and preferably formed in one unitary piece, for example by way of at least one casting process and/or molding process and/or additive process, for example 3D-printing, and/or formation process based on a single blank and/or any other known process deemed suitable by someone skilled in the art. Thereby, a construction of the drawer unit may be simplified. Furthermore, production costs of the drawer unit may be reduced.

For the purpose of simplifying an assembly and/or disassembly of the cable management device from the cable management system, it is proposed that at least one fixation unit and advantageously all of the fixation units comprise(s) at least one snap element at least for assisting in a fixation of at least one of the connection management units. The snap element may be embodied as a latch tongue and/or a latch hole. The fixation units may comprise any applicable number of snap elements, which may be embodied different from each other.

It is possible that each fixation unit is configured for a fixation of a specific connection management unit. In order to increase flexibility, it is proposed that the cable management system comprises the first connection management unit and at least one further first connection management unit which differs from the first connection management unit by at least one feature and which is fixable to the first fixation unit. The further first connection management unit may differ from the first connection management unit by at least one geometrical parameter and/or by a functionality. A "geometrical parameter" of a unit may be understood, in this context, as a structural feature of the unit, e.g. as a number of compartments of the unit, and/or as a feature concerning geometric dimensions such as a length, a volume, a height and/or a width. The geometrical parameter could additionally or alternatively be a surface structure and/or connecting structure of the unit for a connection with at least one further unit. Thereby, a space requirement and/or functionality of the drawer unit may be adaptable in a simplified manner.

In order to further increase a flexibility, it is proposed that the cable management system comprises the second connection management unit and at least one further second connection management unit which differs from the second connection management unit by at least one feature and which is fixable to the second fixation unit. The further second connection management unit may differ from the second connection management unit by at least one geometrical parameter and/or by a functionality. Thereby, a space requirement and/or functionality of the drawer unit may be further adapted in a simplified manner.

In order to simplify a handling of the cables, it is proposed that the cable management system comprises at least one of the connection management units which comprises at least one plug connector array. All of the connection management units may comprise at least one plug connector array. A "plug connector array" may be understood as a plurality of plug connectors for at least one member of at least one of the cables, which may be embodied as plugs and/or sockets and/or any other type of connection element known to one skilled in the art. Preferably, the plug connector array comprises at least one input plug connector configured to guide a signal, preferably an optical signal, of the member into the plug connector array and at least one output plug connector configured to lead the signal out of the plug connector array. Advantageously, the connection management unit comprising the plug connector array is embodied as an adapter bar. An "adapter bar" may be understood as an elongate unit comprising a plug connector array, which advantageously defines a plug direction that is perpendicular to a longitudinal direction of the adapter bar. An "elongate unit" may be understood as a unit wherein a smallest imaginary rectangular cuboid just still completely enclosing the object has a length which is at least twice, advantageously four times, especially advantageously six times, preferably eight times and especially preferably ten times the length of a width and height of the rectangular cuboid. Preferably, the adapter bar comprises at least two different types of plug connectors, wherein a first plug connector type is configured to couple with the member while a second plug connector type is configured to couple with a further unit, preferable a further cable, which is advantageously different from the fiber and/or the cable. Advantageously, the first plug connector type provides an input plug connector of the adapter bar while the second plug connector type provides an output plug connector of the adapter bar. This allows handling a coupling of the cables with further cables without the need for additional devices.

Advantageously, the cable management system comprises at least one of the connection management units, which comprises at least one splice holder. All of the connection management units may comprise at least one splice holder. A "splice holder" may be understood as a unit configured to receive at least one splice unit, for example a mechanical splice unit, wherein the splice unit is configured to connect at least two optical fibers of the cable. It is possible that the splice holder comprises at least one guide rail configured to define a maximum bending radius of the optical fibers and/or to guide the optical fibers to the splice unit. Advantageously, the splice holder comprises at least two protrusions, preferably a multitude of protrusions, configured to define a receiving space for the splice unit. Favorably, the splice holder comprises at least two further protrusions, preferably a multitude of further protrusions, which are configured to guide the fibers with a predefined distance between respectively neighboring fibers. The protrusions may be embodied as ribs and/or lugs and/or hooks and/or rods. Thus a safe handling of fibers of the cables may be achieved in a simplified manner.

Furthermore, it is proposed that the cable management system comprises at least one of the connection management units, which comprises at least one splitter holder. All of the connection management units may comprise at least one splitter holder. A "splitter holder" may be understood as a unit configured for a fixation of at least one splitter unit, for example via at least one snap connection and/or plug connection and/or screw connection and/or magnet connection. The splitter holder may be configured for a fixation of any applicable number of splitters. A "splitter unit" may be understood as a unit configured to branch at least one optical signal, advantageously an optical signal of at least one fiber of at least one of the cables. Preferably, the splitter unit comprises at least one input plug connector and at least two output plug connectors. This allows improving a flexibility of a routing of the cables. Advantageously, a number of fibers going out of the cable management device may be varied independently from a number of fibers going into the cable management device.

Advantageously, the first connection management unit differs from the second connection management unit. Especially advantageously, the first connection management unit comprises at least one splice holder and the second connection management unit comprises at least one plug connector array. Alternatively, the first connection management unit and the second connection management unit may feature any applicable distribution of plug connector arrays, splice holders and/or splitter holders.

It is possible that all of the connection management units are fixable in a single fixing orientation. For the purpose of further increasing a flexibility of a routing of the cables, it is proposed that at least one of the connection management units is fixable in different fixing orientations. A "fixing orientation" may be understood as a predefined and fixed orientation of the connection management unit. Advantageously, the fixing orientation of the connection management unit can be switched by detaching the connection management unit, preferably entirely, from the drawer unit, changing its orientation to the chosen fixing orientation and then reattaching the connection management unit. For example, the connection management unit may be flipped upside down and/or flipped sideways and/or pivoted in the different fixing orientations. Preferably, the connection management unit comprises at least one plug connector array. In this way, a function of one and the same connection management unit can be adapted by changing its fixing orientation. Advantageously, a connection management unit comprising at least one plug connector array can be fixed upside down, permitting a plugging into the plug connector array under different special restrictions.

According to the invention the cable management system comprises at least one cable strengthening member holder which is fixable by at least one third fixation unit of the drawer unit. The third fixation unit is capable of a fixation of any applicable number of cable strengthening member holders. The third fixation unit may, preferably releasably, hinder a movement of the cable strengthening member holder by means of at least one plug connection and/or snap connection and/or screw connection and/or magnet connection. Preferably, the third fixation unit comprises at least one snap element configured to realize a snap connection with a corresponding snap element of the cable strengthening member holder. The cable strengthening member holder may fix a cable strengthening member of the cable by means of at least one snap holder and/or plug holder and/or screw holder and/or magnet holder. The cable strengthening member holder may comprise a guidance and/or sleeve for a strengthening member of the cable. Preferably, the cable strengthening member holder fixes the cable strengthening member by means of at least one wrap element. A "wrap element" may be understood as an element configured to hold another element by comprising a surface that the other element is to be wrapped on and/or around. It is possible that the cable strengthening member is tied to the cable strengthening member holder. Preferably, the cable strengthening member holder comprises at least two wrap elements configured to hold the cable strengthening member by defining with their surfaces a channel featuring at least one intersection, which the cable strengthening member is at least partially positioned in in a wrapped state. The channel may, for example, have the shape of a lemniscate. Alternatively, the channel may have any other shape with an n-fold radial symmetry. This permits relief of a pulling stress from the cables while preventing damage to the more delicate members of the cables. Advantageously, the cable strengthening member is storable in a space-efficient way. Thereby, safety may be increased in a simplified manner. Advantageously, breakage of the cable is preventable without the need for additional devices.

According to the invention the cable strengthening member holder is, preferably exchangeably, pushable along a direction that is perpendicular to a main extension plane of the drawer unit from an unlocked into a locked state. A "main extension direction" of an object may be understood as a direction which is oriented parallel to a longest edge of a smallest imaginary rectangular cuboid just still completely enclosing the object. A "main extension plane" of an object may be understood as a plane which is oriented parallel to a largest side surface of a smallest imaginary rectangular cuboid just still completely enclosing the object, and which preferably runs through the center of the rectangular cuboid. It could be possible that the cable strengthening member holder is pushable in one direction and pullable in an opposite direction. Advantageously, the cable strengthening member holder is positioned in a gap in the drawer unit that is open in two directions that are perpendicular to the main extension plane of the drawer unit. The cable strengthening member holder could feasibly be configured to be pushable only in a detached state. Preferably, the cable strengthening member holder is pushable when in an attached state. Especially preferably, the member holder fixation unit comprises at least one fixation element, advantageously a snap element, which defines at least two fixation positions of the cable strengthening member holder corresponding to the unlocked state and the locked state respectively. Thereby, a usage of the cable strengthening member holder may be simplified. Advantageously, a number of steps required to relieve a pulling stress from the cables is reducible. According to the invention the cable management system comprises at least one circumference holder for a fixation of a circumference of at least one longitudinal object, the circumference holder being fixable by at least one further third fixation unit or fourth fixation unit of the drawer unit. The circumference holder could be configured to fix a circumference of at least one cable jacket of at least one of the cables. Preferably, the circumference holder is configured to fix a circumference of at least one cable tube into which at least one of the cables is inserted. Preferably, the circumference holder is positioned at a cable entry of the drawer unit, preferably on a rear side of the drawer unit. The circumference holder may fix the circumference of the longitudinal object by means of at least one plug holder and/or screw holder and/or magnet holder. Preferably, the circumference holder fixes the circumference of the longitudinal object by means of at least one snap holder. Especially preferably, the circumference holder is embodied as a snap clamp. Advantageously, the circumference holder is pivotably fixed by the circumference holder fixation unit. Especially advantageously, the circumference holder comprises at least one recess and/or protrusion configured to correspond with at least one recess and/or protrusion of the longitudinal object in order to hinder a movement of the longitudinal object perpendicularly to a longitudinal direction of the cable. Preferably, the circumference holder comprises ribs which correspond to further ribs of the longitudinal object. Thereby, a pulling stress of the cables can be relieved more effectively. Advantageously, a pulling stress of the cables can be relieved at a critical point, which is the cable entry. Alternatively, the circumference holder could be slidably and/or rotatably fixed by the further third fixation unit.

In embodiments, not being part of the claimed invention, the circumference holder is configured for an irreversible fixation of the longitudinal object. In order to improve flexibility, according to the invention the circumference holder is interchangeably fixable in a locked state, in which the circumference holder holds the longitudinal object, and in an unlocked state, in which the longitudinal object is released. The "locked state" and/or the "unlocked state" may be understood as a state of the circumference holder and/or the circumference holder fixation unit. That the longitudinal object is "released" may mean that the circumference holder releases a fixation of the circumference of the longitudinal object. One could imagine that the circumference holder is pushable and/or pullable and/or screwable and/or pivotable from the locked state into the unlocked state. Advantageously, the circumference holder and/or the further third fixation unit are/is elastically bendable from the locked state into the unlocked state. Especially preferable, the circumference holder and/or the further third fixation unit are/is bendable for the purpose of releasing a snap connection and allowing movement of the circumference holder. Thereby, a demounting and/or remounting of the longitudinal object from respectively in the drawer unit is achievable in a simplified manner. To further increase flexibility, it is feasible that the circumference holder and/or the further third fixation unit comprise/s a ratchet defining at least two locked states of the circumference holder. This allows adapting the circumference holder to different types of longitudinal objects with different diameters in a simplified manner.

According to the claimed invention, the drawer unit comprises at least one cable strengthening member holder and at least one circumference holder. The drawer unit may comprise any applicable number of cable strengthening member holders and circumference holders. The cable strengthening member holders and circumference holders may be fixed by a singular third fixation unit and/or further third fixation unit respectively. Preferably, each cable strengthening member holder and circumference holder is fixed by a separate third fixation unit and/or further third fixation unit.

To achieve a simplified and/or cost-efficient and/or space-efficient assembly of a cable management device from the cable management system, a cable management device is proposed, which is implemented by assembly from the cable management system. The cable management device may use any applicable number of members of the cable management system for assembly. Preferably, the cable management system serves as a construction kit for assembly of the cable management device.

Furthermore, a method is proposed for assembling a cable management device, wherein the cable management system is used to assemble the cable management device. In this way, a simplified and/or cost-efficient and/or space-efficient assembly of a cable management device from the cable management system is achievable. Additional costs and/or space due to using separate trays with connection management units may advantageously be avoided.

### Drawings

Further advantages may become apparent from the following description of the drawings. In the drawings exemplary embodiments of the invention are shown. The drawings, the description and the claims contain a plurality of features in combination. Someone having ordinary skill in the art will purposefully also consider the features separately and will find further expedient combinations.

If there is more than one specimen of a certain object, only one of these is given a reference numeral in the figures and in the description. The description of this specimen may be correspondingly transferred to the other specimens of the object. For the sake of clarity, in some cases a plurality of the specimens may be given the same reference numeral in the figures. Whenever there are a plurality of the same specimen, there may also be any applicable number of specimens differing from each other.

It is shown in:
- Fig. 1: a schematic view of an exemplary cable management device assembled from a cable management system which comprises a plurality of cable management units, drawer units and further drawer units,
- Fig. 2: a schematic view of one of the drawer units without a cover,
- Fig. 3: a schematic top view of the drawer unit without the cover,
- Fig. 4: a schematic view of a connection management unit of the drawer unit,
- Fig. 5: a schematic sectional view of the drawer unit along line A-A in Fig. 3 and a cable strengthening member holder of the drawer unit,
- Fig. 6: a schematic top view of the cable strengthening member holder,
- Fig. 7: a further schematic sectional front view along line B-B in Fig. 3 and a circumference holder of the drawer unit,
- Fig. 8: a schematic view of the circumference holder and
- Fig. 9: a schematic flowchart of a method for assembling the cable management device.

### Description of exemplary embodiments

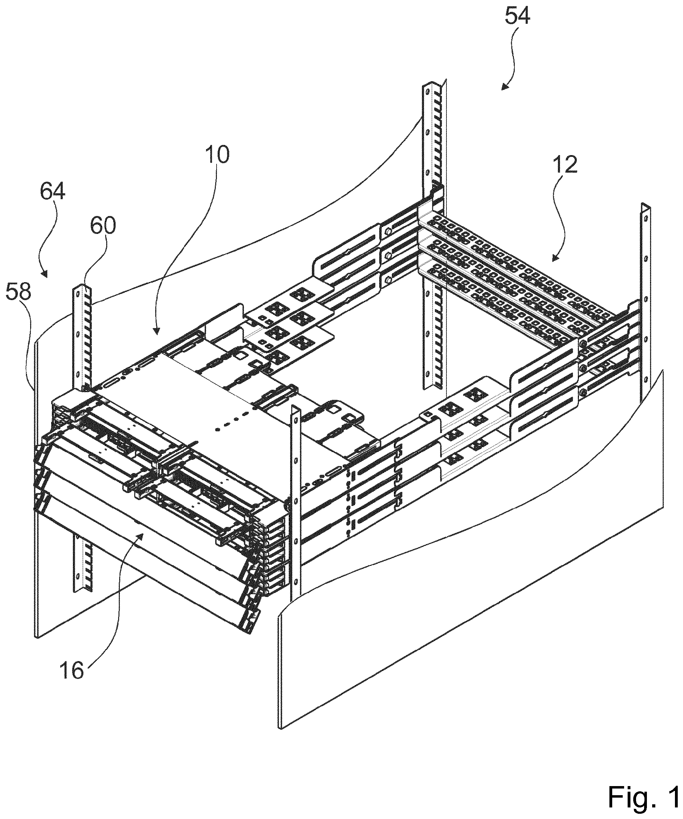

Figure 1 schematically shows a cable management device 54 which is implemented by assembly from a cable management system 10.

The cable management device 54 is implemented as a network cabinet 58 with a rack 60. The cable management device 54 is configured for a management of cables, which may be embodied as optical fiber cables. However, it is also conceivable to use cables that differ from optical fiber cables, e.g. electric cables.

The cable management system 10 comprises at least one cable management unit 12. In the present case, the cable management device 54 comprises a plurality of cable management units 12, in particular but not limited to three cable management units 12, wherein for the sake of clarity in figure 1 only one of the cable management units 12 has been given a reference numeral.

The cable management units 12 are located adjacently to each other. The cable management units 12 are located one above the other. The cable management units 12 are at least substantially identical to each other. Moreover, the cable management units 12 are releasable from, connectable to and/or exchangeable for each other individually.

The following description will be restricted to one of the cable management units 12, wherein, due to the at least substantially identical construction of the cable management units 12, the following description may also apply to possible other cable management units 12.

The cable management unit 12 is in the present case embodied as a 19-inch insert. The cable management unit 12 is configured to be used in a carrier unit 64, in the present case in particular in a rack 60. Herein, the cable management unit 12 is installed horizontally.

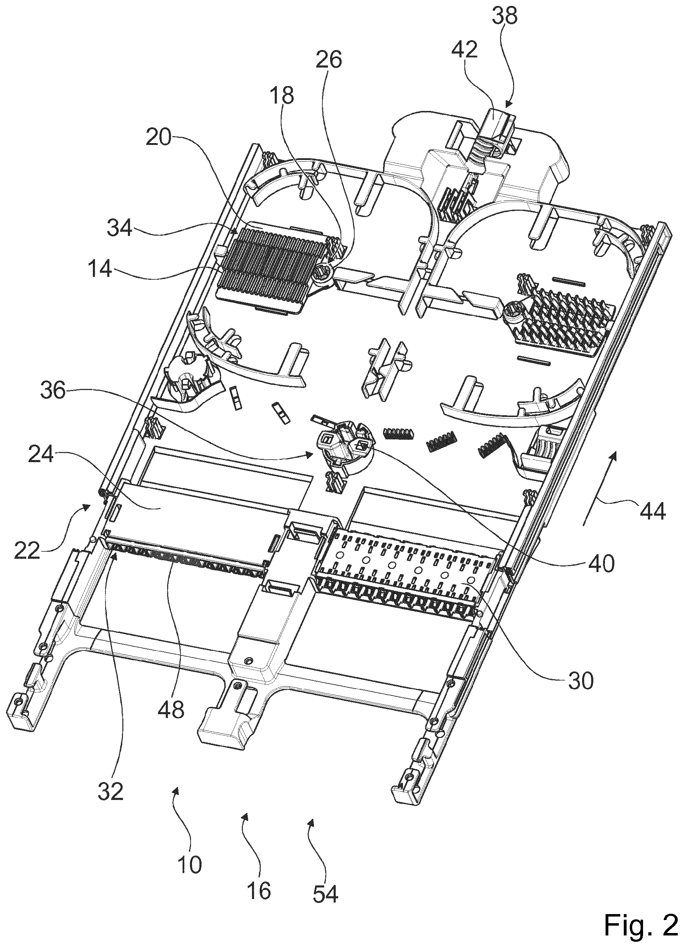

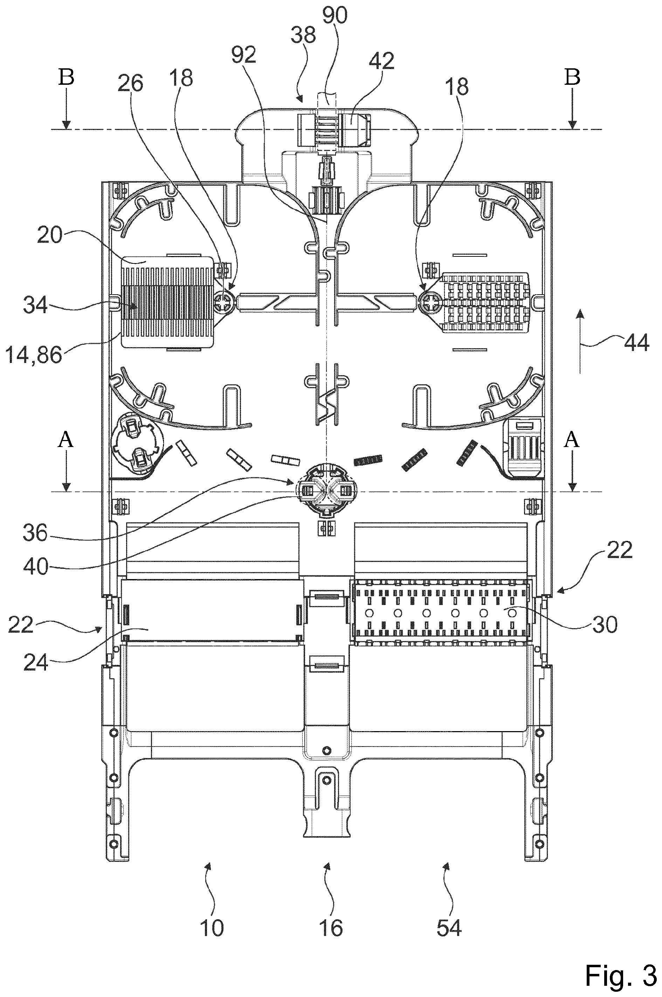

The cable management system 10 comprises in the present case a drawer unit 16, which is shown with a cover in figure 1 and without a cover in figures 2 and 3. The drawer unit 16 is configured for a management of cables. The drawer unit 16 may manage any applicable number of cables, for this example, the drawer unit 16 manages a singular cable (not shown). The drawer unit 16 is embodied in a one-part implementation. The drawer unit 16 is produced by an injection-molding process. The drawer unit 16 comprises two first fixation units 18, which are identical to each other and are positioned opposite each other. The first fixation unit 18 comprises four snap elements 26. The snap elements 26 are arranged in a circle. The snap elements 26 are identical to each other. The snap element 26 is bendable towards a center of the circle in a similar way to snap elements commonly used in DVD cases. The cable management system 10 comprises a first connection management unit 20. The first fixation unit 18 is configured for a fixation of the first connection management unit 20. The snap element 26 is configured to assist in a fixation of the first connection management unit 20. The first connection management unit 20 comprises an insertion space (not shown) which corresponds to the snap element 26. The first connection management unit 20 comprises a splice holder 34. The splice holder 34 comprises a multitude of ribs 14. The ribs 14 are configured to define receiving spaces for splice units (not shown). The ribs 14 are identical to each other.

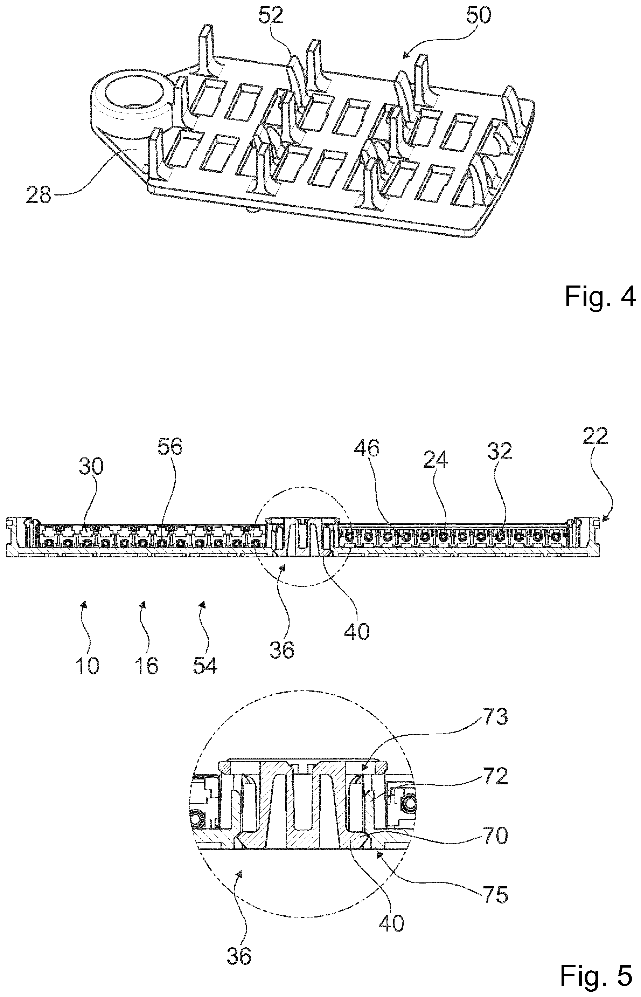

The cable management system 10 comprises a further first connection management unit 28, which is shown in detail in figure 4. The further first connection management unit 28 differs from the first connection management unit 20 by at least one feature. The further first connection management unit 26 is fixable by the first fixation unit 18. The first fixation unit 18 may be used for a fixation of the first connection management unit 20 or the further first connection management unit 28. The further first connection management unit 28 comprises a splitter holder 50. The splitter holder 50 defines three identical receiving spaces for identical splitter units (not shown). Alternatively, the receiving spaces and/or the splitter units could differ from each other. The splitter holder 50 comprises identical fixation rods 52. The fixation rod 52 is elastically bendable in order to allow the splitter module to be inserted into the receiving space. In a mounted state of the splitter module, the fixation rod 52 pushes back against the splitter module to hold it in position.

The drawer unit 16 comprises two second fixation units 22, which are identical to each other and are positioned opposite each other. The second fixation unit 22 comprises two identical rails (not shown) on opposite sides of the second fixation unit 22. Alternatively, the second fixation unit 22 may comprise any number of snap elements or other fixation elements known to someone skilled in the art. The cable management system 10 comprises a second connection management unit 24. The second fixation unit 22 is configured for a fixation of the second connection management unit 24. The second connection management unit 24 comprises a plug connector array 32. The second connection management unit 24 is embodied as an adapter bar. The second connection management unit 24 comprises a multitude of identical input plug connectors 46 and identical output plug connectors 48, which are shown in detail in figures 2 and 5. The second connection management unit 24 is fixable in different fixing orientations. The second connection management unit 24 is fixable flipped upside down. The second connection management unit 24 comprises four identical further rails (not shown) on opposite sides of the second connection management unit 24, which correspond to the rails of the second fixation unit 22. The second connection management unit 24 is slidably fixable by the second fixation unit 22. The second connection management unit 24 is insertable in the second fixation unit 22 along an insertion direction parallel to a main expansion direction 44 of the drawer unit 16.

The cable management system 10 comprises a further second connection management unit 30. The further second connection management unit 30 differs from the second connection management unit 24 by at least one feature. The further second connection management unit 30 comprises a multitude of identical further input plug connectors 56. The further input plug connectors 56 differ from the input plug connectors 46 of the second connection management unit 24. The further second connection management unit 30 is fixable to the second fixation unit 22. The second fixation unit 22 may be used for a fixation of the second connection management unit 24 or of the further second connection management unit 30.

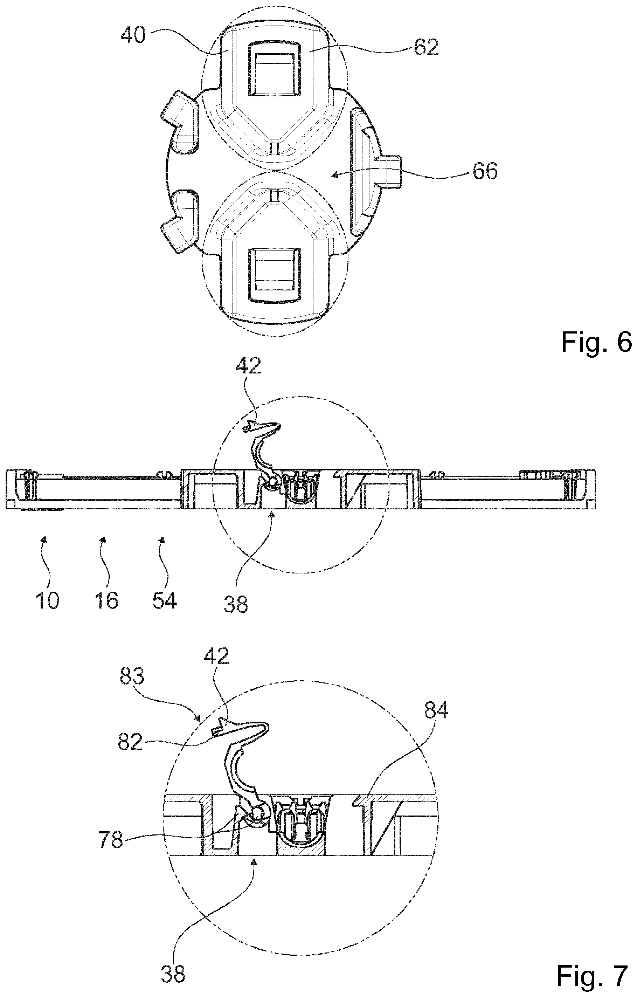

The drawer unit 16 comprises a third fixation unit 36, which is configured for a fixation of a cable strengthening member holder 40 of the cable management system 10. The cable strengthening member holder 40 is shown in detail in figures 5 and 6. The cable strengthening member holder 40 comprises two identical wrap elements 62, which are shown in detail in figure 6. The wrap elements 62 are positioned opposite each other. The wrap elements 62 define a channel 66 with their surfaces, which is indicated by a dotted line for the sake of clarity. The channel 66 has the shape of a lemniscate. The cable strengthening member holder 40 is configured for a fixation of a cable strengthening member 92 of the cable as illustrated by a dotted line in figure 3. In an assembled state the cable strengthening member 92 is partially positioned in the channel 66.

The cable strengthening member holder 40 is pushable along a direction that is perpendicular to the main extension direction 44 of the drawer unit 16. The cable strengthening member holder 40 is pushable from an unlocked into a locked state. After the cable strengthening member 92 has been wrapped around the wrap elements 62, the cable strengthening member holder 40 is pushed from the unlocked into the locked state to apply a tension onto the cable strengthening member 92. The cable strengthening member holder 40 comprises two identical snap elements 70, which are located on opposite sides of the cable strengthening member holder 40 and are shown in detail in figure 5. The third fixation unit 36 comprises two identical corresponding snap elements 72. Each corresponding snap element 72 comprises a first receiving space 73 and a second receiving space 75. The receiving spaces 73, 75 are configured to respectively receive the snap elements 70. The receiving spaces 73, 75 define the locked state and the unlocked state of the cable strengthening member holder 40 respectively. Alternatively, the corresponding snap element 72 may comprise any applicable number of receiving spaces. The cable strengthening member holder 40 is positioned in a gap of the drawer unit 16. The gap is open in two directions that are perpendicular to the main extension plane of the drawer unit 16. The gap allows a user to reach the cable strengthening member holder 40 from the two directions and push it into a respective opposite direction respectively.

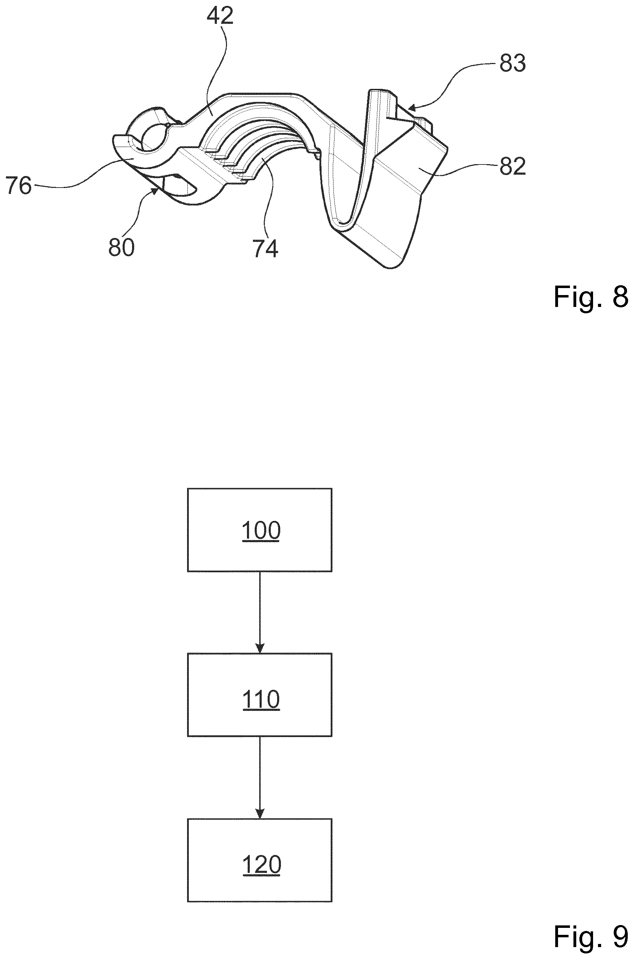

The drawer unit 16 comprises a further third fixation unit 38, which is configured for a fixation of a circumference holder 42 of the cable management system 10. The circumference holder 42 is shown in detail in figures 7 and 8. The circumference holder 42 is configured for a fixation of a circumference of a longitudinal object 90 as shown in figure 3. The longitudinal object 90 is embodied as a cable tube. Alternatively, the longitudinal object 90 may be embodied as a cable jacket. The cable is inserted into the longitudinal object 90. The longitudinal object 90 is ribbed. Alternatively, the longitudinal object 90 may be smooth and/or comprise any other kind of protrusion. The circumference holder 42 is embodied as a clamp. The circumference holder 42 comprises a multitude of identical tube fixation ribs 74. The fixation ribs 74 are configured to hinder a movement of the longitudinal object 90 perpendicularly to a longitudinal direction of the cables. The fixation ribs 74 correspond to the ribs of the longitudinal object 90.

The circumference holder 42 is exchangeably fixable in a locked state and in an unlocked state. In the locked state, the circumference holder 42 holds a circumference of the longitudinal object 90. In the unlocked state, the longitudinal object 90 is released. The circumference holder 42 comprises a first snap element 76. The first snap element 76 comprises a further receiving space 80. The further third fixation unit 38 comprises a corresponding first snap element 78. The corresponding first snap element 78 comprises a rod and a bendable latch tongue. The circumference holder 42 is configured to be mounted on the rod via the first snap element 76 in an assembled state. The further receiving space 80 is configured to receive the latch tongue in a locked state of the circumference holder 42. The circumference holder 42 comprises a second snap element 82. The second snap element 82 is embodied as a bendable latch tongue with a latch tongue receiving space 83. The circumference holder fixation unit 38 comprises a corresponding second snap element 84. The corresponding second snap element 84 is embodied as a latch tongue. The latch tongue receiving space 83 is configured to receive the corresponding second snap element 84 in a locked state of the circumference holder 42.

During assembly the longitudinal object 90 is fixed to the drawer unit 16 by the circumference holder 42. Inside the drawer unit 16, members of the cable are separated. The cable strengthening member 92 is guided straight towards the cable strengthening member holder 40 and is wrapped around the wrap element 40 as indicated by a dotted line. Optical fibers (not shown) of the cable are guided towards the left and/or the right and may be inserted in the splice units fixed by the splice holder 34.

Figure 9 shows a schematic diagram of a method for assembling the cable management device 54. In a selection step 100, a user selects the kind of connection management units 20, 24, 28, 30, cable strengthening member holders 40 and circumference holders 42 he needs for a task at hand. In an assembly step 110, which preferably follows the selection step 100, the selected connection management units 20, 24, 28, 30, cable strengthening member holders 40 and circumference holders 42 are fixed by the fixation units 18, 22, the member holder fixation unit 36 and the circumference holder fixation unit 38. In an insertion step 120, which preferably follows the assembly step 110, the assembled drawer unit 16 is inserted in the cable management unit 12.

### Reference numerals

- 10: cable management system
- 12: cable management unit
- 14: rib
- 16: drawer unit
- 18: first fixation unit
- 20: first connection management unit
- 22: second fixation unit
- 24: second connection management unit
- 26: snap element
- 28: further first connection management unit
- 30: further second connection management unit
- 32: plug connector array
- 34: splice holder
- 36: third fixation unit
- 38: further third fixation unit
- 40: cable strengthening member holder
- 42: circumference holder
- 44: main extension direction
- 46: input plug connector
- 48: output plug connector
- 50: splitter holder
- 52: fixation rod
- 54: cable management device
- 56: further input plug connector
- 58: network cabinet
- 60: rack
- 62: wrap element
- 64: carrier unit
- 66: channel
- 70: snap element
- 72: corresponding snap element
- 73: first receiving space
- 74: fixation rib
- 75: second receiving space
- 76: first snap element
- 78: corresponding first snap element
- 80: further receiving space
- 82: second snap element
- 83: latch tongue receiving space
- 84: corresponding second snap element
- 90: longitudinal object
- 92: cable strengthening member
- 100: selection step
- 110: assembly step
- 120: insertion step

## Claims

1. A cable management system (10) comprising: at least one drawer unit (16) configured for a management of cables, wherein the drawer unit (16) comprises at least one first fixation unit (18) for a fixation of at least one first connection management unit (20) and at least one second fixation unit (22) for a fixation of at least one second connection management unit (24), and comprising at least one circumference holder (42) for a fixation of a circumference of at least one longitudinal object (90), wherein the cable management system (10) comprises at least one cable strengthening member holder (40) which is fixable by at least one third fixation unit (36) of the drawer unit (16), **characterized in that** the cable strengthening member holder (40) is pushable along a direction that is perpendicular to a main extension plane of the drawer unit (16) from an unlocked into a locked state, wherein the circumference holder (42) is fixable by at least one fourth fixation unit of the drawer unit (16), wherein the circumference holder (42) is interchangeably fixable to the drawer unit (16) in a locked state, in which the circumference holder (42) holds the longitudinal object (90), and in an unlocked state, in which the longitudinal object (90) is released.

2. The cable management system (10) according to claim 1, **characterized in that** the drawer unit (16) is embodied in a one-part implementation.

3. The cable management system (10) according to claim 1 or 2, **characterized in that** at least one of the fixation units (18, 22) comprises at least one snap element (26) at least for assisting in a fixation of at least one of the connection management units (20, 24).

4. The cable management system (10) according to any one of the preceding claims, **characterized by** the first connection management unit (20) and at least one further first connection management unit (28) which differs from the first connection management unit (20) by at least one feature and which is fixable to the first fixation unit (18).

5. The cable management system (10) according to any one of the preceding claims, **characterized by** the second connection management unit (24) and at least one further second connection management unit (30) which differs from the second connection management unit (24) by at least one feature and which is fixable to the second fixation unit (22).

6. The cable management system (10) according to any one of the preceding claims, **characterized by** at least one of the connection management units (20, 24, 28, 30), which comprises at least one plug connector array (32).

7. The cable management system (10) according to any one of the preceding claims, **characterized by** at least one of the connection management units (20, 24, 28, 30), which comprises at least one splice holder (34).

8. The cable management system (10) according to any one of the preceding claims, **characterized by** at least one of the connection management units (20, 24, 28, 30), which comprises at least one splitter holder (50).

9. The cable management system (10) according to any one of the preceding claims, **characterized in that** at least one of the connection management units (20, 24, 28, 30) is fixable in different fixing orientations.

10. A cable management device (54) implemented by assembly from a cable management system (10) according to any one of the preceding claims, wherein the cable management system (10) serves as a construction kit.

11. A method for assembling a cable management device (54), in particular according to claim 10, **characterized in that** a cable management system (10) according to any one of claims 1 to 9 is used to assemble the cable management device (54).

## Patentansprüche

1. Kabelmanagementsystem (10), welches aufweist: mindestens eine Schubladeneinheit (16), die für ein Management von Kabeln vorgesehen ist, wobei die Schubladeneinheit (16) mindestens eine erste Fixierungseinheit (18) zu einer Fixierung mindestens einer ersten Verbindungsmanagementeinheit (20) und mindestens eine zweite Fixierungseinheit (22) zu einer Fixierung mindestens einer zweiten Verbindungsmanagementeinheit (24) umfasst, und welches mindestens einen Umfangshalter (42) zu einer Fixierung eines Umfangs mindestens eines länglichen Objekts (90) aufweist, wobei das Kabelmanagementsystem (10) mindestens einen Kabelverstärkungselementhalter (40) aufweist, der durch mindestens eine dritte Fixierungseinheit (36) der Schubladeneinheit (16) fixierbar ist, **dadurch gekennzeichnet, dass** der Kabelverstärkungselementhalter (40) entlang einer Richtung, die senkrecht zu einer Haupterstreckungsebene der Schubladeneinheit (16) ist, von einem entriegelten in einen verriegelten Zustand verschiebbar ist, wobei der Umfangshalter (42) durch mindestens eine vierte Fixierungseinheit der Schubladeneinheit (16) fixierbar ist, wobei der Umfangshalter (42) in einem verriegelten Zustand, in dem der Umfangshalter (42) das längliche Objekt (90) hält, und in einem entriegelten Zustand, in dem das längliche Objekt (90) freigegeben ist, austauschbar an der Schubladeneinheit (16) fixierbar ist.

2. Kabelmanagementsystem (10) nach Anspruch 1, **dadurch gekennzeichnet, dass** die Schubladeneinheit (16) in einer einteiligen Ausgestaltung ausgebildet ist.

3. Kabelmanagementsystem (10) nach Anspruch 1 oder 2, **dadurch gekennzeichnet, dass** mindestens eine der Fixierungseinheiten (18, 22) mindestens ein Schnappelement (26) zumindest zur Unterstützung einer Fixierung von mindestens einer der Verbindungsmanagementeinheiten (20, 24) aufweist.

4. Kabelmanagementsystem (10) nach einem der vorhergehenden Ansprüche, **gekennzeichnet durch** die erste Verbindungsmanagementeinheit (20) und mindestens eine weitere erste Verbindungsmanagementeinheit (28), die sich von der ersten Verbindungsmanagementeinheit (20) durch mindestens ein Merkmal unterscheidet und die an der ersten Fixierungseinheit (18) fixierbar ist.

5. Kabelmanagementsystem (10) nach einem der vorhergehenden Ansprüche, **gekennzeichnet durch** die zweite Verbindungsmanagementeinheit (24) und mindestens eine weitere zweite Verbindungsmanagementeinheit (30), die sich von der zweiten Verbindungsmanagementeinheit (24) durch mindestens ein Merkmal unterscheidet und die an der zweiten Fixierungseinheit (22) fixierbar ist.

6. Kabelmanagementsystem (10) nach einem der vorhergehenden Ansprüche, **gekennzeichnet durch** mindestens eine der Verbindungsmanagementeinheiten (20, 24, 28, 30), die mindestens eine Steckverbinderanordnung (32) aufweist.

7. Kabelmanagementsystem (10) nach einem der vorhergehenden Ansprüche, **gekennzeichnet durch** mindestens eine der Verbindungsmanagementeinheiten (20, 24, 28, 30), die mindestens einen Spleißhalter (34) aufweist.

8. Kabelmanagementsystem (10) nach einem der vorhergehenden Ansprüche, **gekennzeichnet durch** mindestens eine der Verbindungsmanagementeinheiten (20, 24, 28, 30), die mindestens einen Splitterhalter (50) aufweist.

9. Kabelmanagementsystem (10) nach einem der vorhergehenden Ansprüche, **dadurch gekennzeichnet, dass** mindestens eine der Verbindungsmanagementeinheiten (20, 24, 28, 30) in unterschiedlichen Fixierungsausrichtungen fixierbar ist.

10. Kabelmanagementvorrichtung (54), die durch Montage aus einem Kabelmanagementsystem (10) nach einem der vorhergehenden Ansprüche gebildet ist, wobei das Kabelmanagementsystem (10) als Bausatz dient.

11. Verfahren zur Montage einer Kabelmanagementvorrichtung (54), insbesondere nach Anspruch 10, **dadurch gekennzeichnet, dass** zur Montage der Kabelmanagementvorrichtung (54) ein Kabelmanagementsystem (10) nach einem der Ansprüche 1 bis 9 verwendet wird.

## Revendications

1. Système de gestion de câbles (10) comprenant : au moins une unité de tiroir (16) conçue pour une gestion de câbles, où l'unité de tiroir (16) comprend au moins une première unité de fixation (18) pour fixer au moins une première unité de gestion de connexion (20) et au moins une deuxième unité de fixation (22) pour fixer au moins une deuxième unité de gestion de connexion (24), et comprenant au moins un rétenteur circonférentiel (42) pour fixer une circonférence d'au moins un objet longitudinal (90), le système de gestion de câbles (10) comprenant au moins un rétenteur d'élément renforçant de câble (40), qui peut être fixé par au moins une troisième unité de fixation (36) de l'unité de tiroir (16),
**caractérisé en ce que** le rétenteur d'élément renforçant de câble (40) peut être poussé le long d'une direction perpendiculaire à un plan d'étendue principale de l'unité de tiroir (16) d'un état déverrouillé à un état verrouillé, où le rétenteur circonférentiel (42) peut être fixé par au moins une quatrième unité de fixation de l'unité de tiroir (16), où le rétenteur circonférentiel (42) peut être fixé de manière interchangeable à l'unité de tiroir (16) dans un état verrouillé dans lequel le rétenteur circonférentiel (42) retient l'objet longitudinal (90), et dans un état déverrouillé dans lequel l'objet longitudinal (90) est libéré.

2. Système de gestion de câbles (10) selon la revendication 1, **caractérisé en ce que** l'unité de tiroir (16) est réalisée d'une seule pièce.

3. Système de gestion de câbles (10) selon la revendication 1 ou 2, **caractérisé en ce qu'**au moins l'une des unités de fixation (18, 22) comprend au moins un élément d'encliquetage (26) au moins pour aider à une fixation d'au moins l'une des unités de gestion de connexion (20, 24).

4. Système de gestion de câbles (10) selon l'une des revendications précédentes, **caractérisé par** la première unité de gestion de connexion (20) et au moins une autre première unité de gestion de connexion (28) qui diffère de la première unité de gestion de connexion (20) par au moins une caractéristique et qui peut être fixée à la première unité de fixation (18).

5. Système de gestion de câbles (10) selon l'une des revendications précédentes, **caractérisé par** la deuxième unité de gestion de connexion (24) et au moins une autre deuxième unité de gestion de connexion (30) qui diffère de la deuxième unité de gestion de connexion (24) par au moins une caractéristique et qui peut être fixée à la deuxième unité de fixation (22).

6. Système de gestion de câbles (10) selon l'une des revendications précédentes, **caractérisé par** au moins l'une des unités de gestion de connexion (20, 24, 28, 30), qui comprend au moins un réseau de connecteurs enfichables (32).

7. Système de gestion de câbles (10) selon l'une des revendications précédentes, **caractérisé par** au moins l'une des unités de gestion de connexion (20, 24, 28, 30), qui comprend au moins un rétenteur d'épissure (34).

8. Système de gestion de câbles (10) selon l'une des revendications précédentes, **caractérisé par** au moins l'une des unités de gestion de connexion (20, 24, 28, 30), qui comprend au moins un rétenteur de séparateur (50).

9. Système de gestion de câbles (10) selon l'une des revendications précédentes, **caractérisé en ce qu'**au moins l'une des unités de gestion de connexion (20, 24, 28, 30) peut être fixée en différentes orientations de fixation.

10. Dispositif de gestion de câbles (54) réalisé par assemblage à partir d'un système de gestion de câbles (10) selon l'une des revendications précédentes, où le système de gestion de câbles (10) sert de kit de construction.

11. Procédé d'assemblage d'un dispositif de gestion de câbles (54), en particulier selon la revendication 10, **caractérisé en ce qu'**un système de gestion de câbles (10) selon l'une des revendications 1 à 9 est utilisé pour assembler le dispositif de gestion de câbles (54).
